# EUROPEAN PATENT APPLICATION

(11) **EP 4 703 874 A1**
(43) Date of publication of application: **04.03.2026**
(21) Application number: 25200061.7
(22) Date of filing: 03.09.2025
(51) Int. Cl.: G06F 8/656, G06N 5/04, G06N 20/00, G06N 20/20, G06F 9/445, G06N 3/063, G06N 3/045, G06N 5/01, G06N 3/10

(54) **METHOD AND SYSTEM FOR DEPLOYMENT AND REPLACEMENT OF A MACHINE-LEARNING MODEL IN ACTIVE ON-LINE USE WITHOUT SERVICE INTERRUPTION**

(30) Priority: 03.09.2024 PT 2024119677
(71) Applicant: Feedzai - Consultadoria e Inovação Tecnológica, S.A., 3030-199 Coimbra (PT)
(72) Inventor: MATSUR, NIKOLETTA, 3030-199 COIMBRA (PT); ARTILHEIRO FERREIRA, ALBERTO EDUARDO, 3030-199 COIMBRA (PT); NASER EDDIN, AHMAD, 3030-199 COIMBRA (PT); BONO, JACOPO, 3030-199 COIMBRA (PT); SILVA MARTINS, JOÃO LUCAS, 3030-199 COIMBRA (PT); COLAÇO FERREIRA, HUGO RICARDO, 3030-199 COIMBRA (PT); PEREIRA, RICARDO, 3030-199 COIMBRA (PT); BALAYAN, VLADIMIR, 3030-199 COIMBRA (PT); LEAL GOMES, ANA SOFIA, 3030-199 COIMBRA (PT); SANTOS RODRIGUES BIZARRO, PEDRO GUSTAVO, 3030-199 COIMBRA (PT)
(74) Representative: Patentree

(57) **Abstract**

Computer-implemented method and system for deployment of a first machine-learning model, and replacement, without service interruption, of a second machine-learning model in active on-line use, comprising: receiving, at a controller, a replacement request; in response to said replacement request, triggering the deployment of the first model and triggering the calculation of features to be used, collecting output data from the first model, fitting and inserting one or more calibration functions downstream from the first model, and routing inference requests to the first model instead of the second model; wherein the triggered deployment of the first model comprises preloading the first model into CPU or GPU memory, and making available the calculated features and the preloaded first model by CPU or GPU, respectively, before the inference requests are routed to the first model, thus enabling that no additional latency is added when traffic is rerouted to the first model.

## Description

### TECHNICAL FIELD

The present disclosure relates to a system and method for deployment of a new machine-learning model and just-in-time replacement of a machine-learning model in active on-line use with the machine-learning model to be deployed in a shadow mode, which has been pre-fetched and pre-calibrated offline and, in particular said machine-learning models being arranged as an inference graph or graphs, especially arranged for machine-learning model distributed computing.

### BACKGROUND

Model serving is the service that allows machine learning models to be accessed and used (also known as model inference) by other services and applications. Like other services, model serving is accessed via its API - Application Programming Interface, a set of functions to use and control the service. A good model serving service provides several guarantees, related with scalability, availability, performance, and more.

The design of a model serving system that supports the seamless evolution and modification of its underlying model binaries, data schemas, model score distributions, and various other configurations presents several challenges. These challenges become even larger in scenarios in which low latency, high throughput and high availability are required, alongside model updates with no interruption and no latency impacts.

One of the primary challenges is the model update process, i.e., the process of replacing one or more Machine Learning (ML) models by newer or better versions of said models, or possible alternative models, or adding, removing, or replace one or more of the referred models that are part of a model consortium or set of models used together to produce a score. Models are tightly coupled by their very nature to the remainder of the ML pipeline. There is a strong coupling between outputs of preceding models and inputs of posterior models, as the correct features should also be provided for model inference calls, which normally are the exact schema of the set of variables used to train or create a given model; while at their outputs, any such model should return scores that are compatible with their consumers, meaning the new score distribution is within an acceptable divergence threshold of the old one (e.g., rules or other systems that make decisions based on the scores of the models). These two couplings hinder the replacement of models without changing code and/or consumers of said models at the same time to another set of compatible features and consumers. Doing so in a distributed computer system is even more challenging, as hardware requirement changes may be necessary when altering the ML pipeline or served models so the runtime performance meets the performance-related Service Level Agreements such as latency and availability.

The challenges presented next become even worse when using a combination of models, but are already present with just one model. There are two main challenges to roll out updates when model serving is not tied to the remainder of the ML pipeline, which are:
Schema evolution, wherein each model operates based on an input and output schema, forming an unambiguous contract for communicating with the model, specifying the format, data, and
constraints for model inference requests and replies. The input schema, for example, defines the set of features required for the model's inference requests. However, new versions of a model may use a different set of features, as model iterations often undergo feature engineering and feature selection steps to maximize model performance. If so, the new schema might become incompatible with the previous version, meaning that the schema of the new model has fields that the schema of the previous model did not, and vice-versa. For systems that never stop answering inference requests, a model update cannot be performed uninterruptedly if the model is replaced by another model with an incompatible input schema and the client is not at least sending the minimal data required to translate/form inference requests for the new model or if there is no imputation process to fill-in the missing features; and
Changes in score distribution. Herein, updated models can have a different score distribution which affect any downstream system leveraging the model score. It is necessary to ensure the outputs of the new model follow the same score distribution or that the outputs produce equal or better performance metrics than the replaced model (e.g., they have a low Jensen-Shannon divergence score), so as not to taint the remainder of the pipeline, such as rules based on specific values that the model outputs, which may disrupt the alert rates for complex systems.

Note that these two challenges become exacerbated when there is more than one model contributing to the output score, as is the case with ensemble models. It is particularly noticeable with score distribution changes, as, instead of a single model needing calibration, all models might need calibration, as well as the aggregate score output, depending on how it is performed. Additionally, in some cases, although not very common, it is possible for the schema to change divergently from model to model, increasing the complexity of schema evolution.

Existing systems require effort from users in several steps of the deployment process, forcing them to perform manual migrations to synchronize updates between inference services and clients, which is not scalable when there is a large number of models in production, or a large number of clients. Note that it is not sufficient to naively update the model in model-serving and use it in the client; a model that requires features not present in inference requests would not be able to score. Additionally, when this issue is solved, the model could still produce a completely different score distribution, which would disrupt other parts of the ML pipeline.

References [1] and [2] perform systematic literature reviews in the machine learning domain that target or mention solutions to model updates, model versioning, schema compatibility and score distribution variations.

Reference [1] extracts ML systems design patterns from 32 academic papers and 48 gray literature documents (i.e., blog posts, social media, etc.). From the 33 patterns and anti-patterns found, only one can be considered useful , which is model versioning, some model versioning being related to data, infrastructure testing, separation of concerns, experimental, model training, etc. Other patterns recognised by said reference depart significantly from the relevant use case. From what is known of the current state of the art, such as, for instance, reference [3], there is no relevant information regarding model versioning patterns.

Reference [2] reviews 141 studies focusing on the software engineering part of ML, among 7 categories presented (e.g., Requirements Engineering, Testing and Quality, Organizational Aspects). Three of those categories are of relevance: Design, Software Development and Tools, and Maintenance and Configuration Management.

Regarding what was tackled on the design category of reference [2], most of studies in the design emphasize the problems inherent to ML systems due to standard techniques from software engineering not working or recognize the adjacent big data issues that accompany machine learning systems: 'They reported one of the complexities posed by ML systems as the "change anything, changes everything" principle, which refers to the dependencies among all the parts of an ML system, i.e., application code, "glue code," ML libraries, and external data'. This principle prevents the use of standard techniques, such as abstraction and information hiding, for reducing coupling' [4].

A second category mentioned in reference [2] is the Software Development and Tools category, which focused more on the training and data transformation operations, and also model development, testing and reusing.

A third category mentioned in reference [2] is Maintenance and Configuration Management. This category referenced papers that dealt with changes in configurations of ML systems, history of experiments and retraining and redeployment. The former and the latter are relevant, however, the first relates to studies dealing more with the issues of managing models (storing, comparing, reproducing, tracking framework dependencies, etc.), including dealing with models that evolve, more specifically with autonomous driving systems, and the latter focused more on model training and redeployment.

A search on ACM DL performed on the 17th of July of 2024 with the broad term "Model Serving" did not yield relevant results.

Outside of academia, a few open-source model serving systems exist, such as KServe, MLRun, Seldon Core, etc. In general, these platforms do not solve the fundamental problems of schema changes and model score distribution changes that are coupled to model updating. For example, Kserve is a model inference platform that uses a specific application leveraging performance and scalability (Kubernetes). While KServe allows inference graphs, there is no mention of schema evolution or calibration of model scores by design, meaning that external logic would be necessary to handle schema evolution, as it is not supported natively. This is true for other model serving platforms that may offer more or less functionalities out of the box (e.g., Seldon Core support for canary deployments and A/B testing or observability at MLRun), however, none of these pay attention to the integration part with the production workflow without interruption or disruption.

These facts are disclosed in order to illustrate the technical problem addressed by the present disclosure.

### GENERAL DESCRIPTION

The present disclosure relates to a system and method for deploying, updating and substituting machine-learning models in active use, in particular machine-learning models organized under an inference graph or graphs, especially for machine-learning model distributed computing, namely memory preloading aspects for said deploying, updating and substituting of machine-learning models.

The present disclosure relates to a computer-implemented method, and computer system thereof, for machine learning model serving, namely, for model serving developed for mission-critical, uninterrupted production environments. The present disclosure supports seamless evolution of underlying data schemas, model binaries, ensemble models, and other configurations, even without causing service interruptions, performance degradation, or significant user impact.

The present disclosure describes a computer-implemented method, and computer system thereof, that manages model versioning in a computer ML pipeline, namely for a distributed computer system.

In an embodiment, the goal of the disclosed model serving computer system and method thereof, which is designed around ML model updates, is to ensure a continuous and reliable service, while accommodating necessary model improvements and adjustments. In other words, the computer system should be designed to serve new model versions without interruption. To that end, said exemplary embodiment needs to overcome the schema evolution issue, and possible alterations in score distribution, as disclosed in the Background.

An embodiment mitigates the aforementioned forms issues with model-coupling to the ML pipeline, allowing for a wider range of scenarios in which it is possible to switch or update models without impacting the clients hosting the remainder of the pipeline. This makes it easier to roll out model updates, but requires maintaining compatibility with existing model schemas and ensuring score-compatibility between different model versions. In an embodiment, a multi-tenant system works for single tenancy as well facilitating the evolution of models, and enabling model updates at scale with little to no intervention from the clients calling the models. Moving the design towards decoupling of the client and the model serving system allows to shift the locus of control of models being served by the present disclosure. An embodiment permits one to control which models are being used and by whom at any time, which allows one to hide the complexity of managing model deployments and updates from clients. This control is optional, and clients might opt to control deployments.

The present disclosure relates to a computer-implemented method for deployment of a first machine-learning model, and replacement, without service interruption, of a second machine-learning model in active on-line use, by the first machine-learning model, the method comprising:
receiving, at a controller configured by code executing therein, a replacement request determining a replacement of the second machine-learning model by the first machine-learning model, and
in response to said replacement request, the controller triggering the deployment of the first machine-learning model and triggering the calculation of features to be used by the first machine-learning model;
   the method further comprising, carrying out by a computer system comprising said controller and configured by code executing therein, in response to said replacement request, and preferably initiated/triggered by the controller, to perform the steps of:
   collecting output data from the first machine-learning model over a predetermined number of inference requests or events,
   fitting one or more calibration functions to the collected output data to generate one or more calibrated outputs of the first machine-learning model,
   inserting downstream from the first machine-learning model the one or more calibration functions, and
   routing inference requests to the first machine-learning model instead of the second machine-learning model;
wherein the triggered deployment of the first machine-learning model comprises preloading the first machine-learning model into at least one of a CPU memory and a GPU memory,
wherein the method further comprises making available the calculated features to the preloaded first machine-learning model, and making available the preloaded first machine-learning model into the at least one of a CPU memory and a GPU memory by at least one of a CPU and a GPU, respectively, before routing inference requests to the first machine-learning model instead of the second machine-learning model, thus enabling that no additional latency is added when traffic is rerouted from the second machine-learning model to the first machine-learning model.

The solution of the present disclosure demonstrates the ability to perform seamless deployment, updating, and substitution of machine-learning models, particularly those organized under inference graphs, without incurring interruptions or noticeable performance degradation. Unlike conventional approaches, which often require scheduled downtime, manual rollback strategies, and/or compromise on inference consistency, the present disclosure ensures machine-learning model compatibility and respective dependent data schemas in mission-critical environments. By integrating memory preloading mechanisms and dynamic configuration handling, the present disclosure eliminates transient states or inconsistencies that could otherwise disrupt production systems, thereby ensuring uninterrupted service delivery.

Moreover, the disclosure goes beyond the normal expectations of model serving frameworks by addressing the practical challenges of evolving distributed machine-learning systems in real-time. The disclosure accommodates changes in model distribution, ensemble configurations, and underlying data schemas while maintaining consistent model scoring distributions, thus minimizing impact on downstream clients and applications. This combination of uninterrupted operability, schema evolution tolerance, and compatibility assurance could not be achieved by straightforward application of existing deployment strategies, and represents a surprising solution to the technical problem of ensuring continuous, reliable, and adaptive model serving in high-availability computing environments.

In an embodiment, the method is for deployment of the first machine-learning model wherein the first machine-learning model is part of an inference graph, and replacement, without service interruption, of the second machine-learning model in active on-line use, by the first machine-learning model, the method comprising:
receiving, at the controller, the replacement request determining a replacement of the second machine-learning model by the first machine-learning model, and
in response to said replacement request, the controller triggering the deployment of the first machine-learning model and triggering the calculation of features to be used by the first machine-learning model;
   the method further comprising, carrying out by a computer system comprising said controller and configured by code executing therein, in response to said replacement request, preferably initiated/triggered by the controller, to perform the steps of:
   collecting output data from the first machine-learning model over the predetermined number of inference requests or events,
   fitting the one or more calibration functions to the collected output data to generate the one or more calibrated outputs of the first machine-learning model,
   inserting the one or more calibration functions into the inference graph downstream from the first machine-learning model, and
   modifying the inference graph to route inference requests to the first machine-learning model instead of the second machine-learning model;
wherein the inference graph is a directed acyclic graph comprising nodes wherein one or more of said nodes are a machine-learning model node;
wherein the triggered deployment of the first machine-learning model comprises preloading the first machine-learning model into a machine-learning model node of the inference graph, where the machine-learning model node comprises the at least one of a CPU and a GPU, and the at least one of a CPU memory and a GPU memory, respectively;
   wherein the method further comprises:
   making available the calculated features to the preloaded first machine-learning model, and making available the preloaded first machine-learning model by the machine-learning model node, before modifying the inference graph to route inference requests to the first machine-learning model instead of the second machine-learning model.

An embodiment comprises, after preloading the first machine-learning model and before the inference requests are routed to the first machine-learning model, in a shadow mode, routing the inference requests to both the first and second machine-learning models and using outputs of the first machine-learning model for collecting output data for fitting the one or more calibration functions to the collected output data.

In an embodiment, the replacement request contains, or contains an identifier indicating (directly/indirectly) a feature schema, wherein said feature schema contains or indicates a set of machine-learning model features to be used by the first machine-learning model, and the method further comprises:
determining, by the controller configured by further code executing therein, which features of said set of machine-learning model features are required for the first machine-learning model;
triggering, by the controller, the calculation of the features to be used by the first machine-learning model that require calculation;
activating, by the controller, the feeding of the calculated features to be used by the first machine-learning model and the feeding of the features to be used by the first machine-learning model that do not require calculation;
making available the calculated and fed features to the first machine-learning model.

In an embodiment, the method further comprises the determining, by the controller, which features of said set of machine-learning model features require calculation from a machine-learning model registry.

In an embodiment, the method further comprises the determining, by the controller, which features of said set of machine-learning model features which do not require calculation (i.e., 'raw' features) from the received replacement request.

An embodiment comprises backfilling a feature datastore configured by code executing therein, and triggered by said controller, with one or more calculated features for the first machine-learning model using historical data that is prior to the inference requests being routed to the first machine-learning model, comprising:
backfilling offline, by the feature datastore, the one or more calculated features;
sending, by the feature datastore, a signal back to the controller, that the one or more calculated features are ready to be used;
triggering, by the controller configured by further code executing therein, on receiving said signal,
the routing inference requests to the first machine-learning model instead of the second machine-learning model.

In an embodiment, the method further comprises selecting a machine-learning model as the first machine-learning model, from a plurality of machine-learning models such that the features required by the selected machine-learning model match said set of machine-learning model features to be used.

In an embodiment, based on the inference request, the controller applies routing rules based on a machine-learning model version identifier or a schema identifier to select a machine-learning model as the first machine-learning model for processing the inference request, wherein a schema identified by the schema identifier comprises an indication of machine-learning model features to be used by the machine-learning model to be selected, in particular based on a schema identifier comprised in said inference request wherein the controller applies routing rules based on a machine-learning model version identifier, a client identifier, a stream identifier or a schema identifier to select the machine-learning model for processing the inference request.

In an embodiment, fitting the one or more calibration functions comprises fitting the one or more calibration functions to match an output distribution of the first machine-learning model to an output distribution of the second machine-learning model within a predetermined divergence threshold, where divergence between distributions may be defined as a metric measuring the difference between distributions.

In an embodiment, the triggered deployment of the first machine-learning model comprises preloading the first machine-learning model into at least one of a CPU memory and a GPU memory, and making available the preloaded first machine-learning model by at least one of a CPU and a GPU, respectively, before the inference requests are routed to the first machine-learning model, i.e., the model is made available just-in-time for the model swap.

In an embodiment, the inference graph is a directed acyclic graph comprising nodes wherein each node is selected from the group consisting of: model nodes comprising a machine-learning model, ensemble nodes comprising two or more machine-learning models, calibration nodes comprising the one or more fitted calibration functions, aggregation nodes combining outputs of a plurality of nodes, transformer nodes for computing transformations of inputs, and combinations thereof.

In an embodiment, two or more of the machine-learning models of said inference graph are arranged to be run in parallel and distributed among a plurality of hardware-based computer processors, in particular wherein machine-learning models of two or more nodes of said inference graph are arranged to be run in parallel and distributed among a plurality of hardware-based processor.

In an embodiment, the nodes of the inference graph comprise:
a first set of nodes each preloaded with the first machine-learning model; and
a second set of nodes each with the second machine-learning model;
wherein modifying the inference graph, to route inference requests to the first machine-learning model instead of the second machine-learning model, comprises modifying the inference graph to route inference requests to the first set of nodes instead of the second set of nodes.

In an embodiment, the inserting of the one or more calibration functions is immediately downstream from the first machine-learning model.

An embodiment comprises a validation step of validating divergence between the calibrated outputs of the first machine-learning model and the outputs of the second machine-learning model against a divergence threshold, and if, and only if, the divergence is within the divergence threshold routing the inference requests to the first machine-learning model instead of the second machine-learning model.

In an embodiment, fitting the one or more calibration functions comprises collecting output data from the first machine-learning model over the predetermined number of inference requests or events using historical data, and fitting the one or more calibration functions to scores computed using the collected output data obtained from historical data.

In an embodiment, each of the nodes of the inference graph are carried out by one CPU or by one GPU, in particular wherein the first machine-learning model is carried out by one CPU or by one GPU and the second machine-learning model is carried out by another CPU or by another GPU.

In an embodiment, each of a plurality of inference service replicas is hardware-based and hosts an instance of the inference graph, for example, each replica is a CPU or GPU based replica machine running on a hardware-based computing system, wherein the method further comprises:
modifying, by said controller, for a first subset of said plurality of inference service replicas, the inference graph to route inference requests to the first machine-learning model instead of the second machine-learning model, and
maintaining, for a second subset of said plurality of inference service replicas, the inference graph routing inference requests to the second machine-learning model.

In an embodiment, preloading the first machine-learning model into at least one of a CPU memory and a GPU memory, comprises loading the first machine-learning model from a non-volatile computer memory and wherein said CPU memory and GPU memory are volatile computer memories, in particular aid non-volatile computer memory being an individual non-volatile computer memory of the corresponding CPU or GPU.

An embodiment comprises a validation step of validating latency of the first machine-learning model against a latency threshold, and if, and only if, the latency is within the latency threshold routing the inference requests to the first machine-learning model instead of the second machine-learning model.

An embodiment comprises a validation step of validating precision of the first machine-learning model against a precision threshold, and if, and only if, the precision is within the precision threshold routing the inference requests to the first machine-learning model instead of the second machine-learning model.

In an embodiment, the controller automatically triggers the deployment, calibration, validation and routing switchover of the machine-learning models based on performance metrics or stored user-defined criteria.

It is also disclosed a computer system for deployment of a first machine-learning model and replacement, without service interruption, of a second machine-learning model in active on-line use, by the first machine-learning model, configured for carrying out any of the embodiments.

It is also disclosed a computer system for deployment of a first machine-learning model, and replacement, without service interruption, of a second machine-learning model in active on-line use, by the first machine-learning model, the system comprising a controller having a processor executing code that configures the processor for:
receiving a replacement request determining a replacement of the second machine-learning model by the first machine-learning model, and
in response to said replacement request, triggering the deployment of the first machine-learning model and triggering the calculation of features to be used by the first machine-learning model,
the system having a further processor executing code that configures the system for, in response to said replacement request, preferably initiated or triggered by the controller, to perform the steps of:
   collecting output data from the first machine-learning model over a predetermined number of inference requests or events,
   fitting one or more calibration functions to the collected output data to generate one or more calibrated outputs of the first machine-learning model,
   inserting downstream from the first machine-learning model the one or more calibration functions, and
   routing inference requests to the first machine-learning model instead of the second machine-learning model;
wherein the triggered deployment of the first machine-learning model comprises preloading the first machine-learning model into at least one of CPU memory and GPU memory,
the system being further configured for making available the calculated features to the preloaded first machine-learning model, and making available the preloaded first machine-learning model into the at least one of a CPU memory and a GPU memory by at least one of CPU and GPU, respectively, before routing inference requests to the first machine-learning model instead of the second machine-learning model.

In an embodiment, the computer system is a multi-tenant computer system and the controller is configured by further code executing therein, based on the inference request, for applying routing rules based on a tenant identifier to select a machine-learning model for processing the inference request.

### BRIEF DESCRIPTION OF THE DRAWINGS

The following figures provide preferred embodiments for illustrating the disclosure and should not be seen as limiting the scope of invention.
**Figure 1****:** Schematic representation of the computer system architecture of an embodiment with communication between the system elements.
**Figure 2**: Schematic representation of an exemplary embodiment of an inference graph.
**Figure 3**: Functional diagram illustrating a programmed computer system for supporting some exemplary embodiments.

### DETAILED DESCRIPTION

The present disclosure relates to a system and method for deploying, updating and substituting machine-learning models in active use, in particular machine-learning models organized under an inference graph or graphs, especially for machine-learning model distributed computing, namely memory preloading aspects for said deploying, updating and substituting of machine-learning models.

The present disclosure relates to a model serving architecture that, in addition to the typical model serving guarantees, can be deployed in mission-critical, uninterrupted production environments. In said mission-critical, uninterrupted scenarios, model serving according to the disclosure enables an evolution of many of its underlying data schemas, model binaries, ensemble models and other configurations in a seamless way, without interruptions, without performance degradation, and with minimal client impact, such as model score distribution changes, thereby proving, as much as possible, backward and forward compatibility.

The following pertains to the computer system of the present disclosure, namely to a low latency, high throughput, resource-adjusting model serving system that addresses the issues mentioned in the background. An embodiment according to the disclosure enables for seamless updates of models, and accounts for model and schema evolution over time, without system downtime for model releases. Moreover, it prevents score distribution divergences, to ensure the correct functioning of downstream tasks. Note that the term "model" which can refer to a Neural Network, tree-based model or any other kind of Machine Learning model, can also be interchanged with an ensemble of models, a stack of models, or a composition of any of the aforementioned, that produce an inference score and are hereby referred to as an inference node, and which can be arranged with other types of nodes like transformations and other operations like routing, forming what are hereby referred to as inference graphs, that besides computing a score can perform supporting generic computations and even select entirely different inference and computation flows. At its simplest though, an inference graph is composed of a single inference node that can be a single model.

The following pertains to the architecture of the present disclosure.

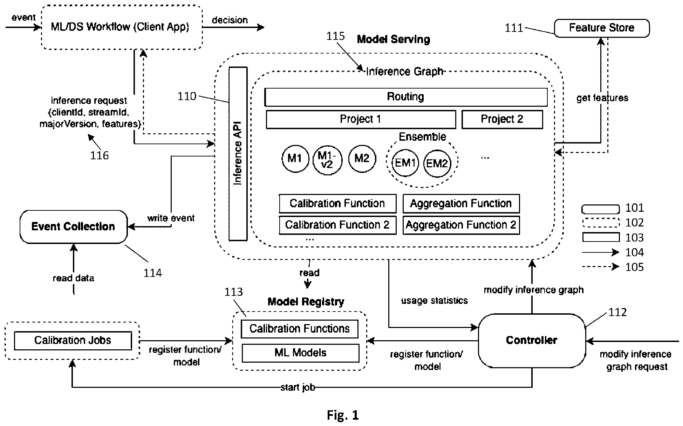

**Figure 1** represents the schematic representation of the computer system architecture of an embodiment with communication between the system elements where: **101** represents a physical system component; **102** represents a logical system component; **103** represents a part of a system component; **104** represents a request or a trigger; **105** represents a response; **110** represents an Inference API; **111** represents a Feature Store; **112** represents a controller; **113** represents a model registry; **114** represents an Event Collection element; **115** represents an inference graph; and **116** represents an inference request. Requests **103** and responses **105** more particularly concern signals shared via a communication protocol between various elements of the system elements described herein.

In an embodiment, a Machine Learning/Data Science (ML/DS) pipeline processes input events, e.g., a transactional dataset or account data, and produces decisions, e.g., a score, a decision string, etc. Said pipeline may comprise different steps, such as feature engineering, to enrich the input events, such as the previous examples, with the historical context or others. This pipeline will make inference calls to one or more models, and it will use the resulting model scores, or decision strings downstream, e.g., in rules.

In an embodiment, model serving, residing outside of the aforementioned ML/DS pipeline, is a multi-tenant system, serving artifacts such as models, ensembles, aggregation and calibration functions. Some of these are shared between clients, and others can serve one client exclusively (e.g., calibration functions). Model serving comprises the following elements:
a model registry;
an inference service made available by an inference Application Programming Interface (API);
a controller;
a training and/or evaluation environment; and
an event collection element.

For simplicity, the present disclosure considers the existence of a single pipeline step that performs a model inference call using a processor suitably configured by code executing therein as the inference client endpoint. The ML/DS pipeline might have one or more of those endpoints. This is often the case in more complex pipelines that require scores from different models. Model serving is a separate service, which processes inference requests from any inference client endpoint and returns an inference response with the model score and/or decision. As noted, requests and responses comprise data signals shared via a communication protocol between various elements of the system elements described herein.

The following pertains to the model registry. In an embodiment, the model registry is where the models and calibration curves/models artifacts and metadata are stored. Model serving will read models from the model registry, and serve them, according to the configured inference graph. The artifacts (models, calibration curves, etc.) are immutable and new revisions can be uploaded manually or automatically, namely through a model training service and/or the Controller, which will update calibration functions recurrently.

Each model stored in the aforementioned model registry has embedded in its metadata (preferably immutable) the definition of its input schema - i.e., the features it uses, and namely which of those are raw (no dependencies), and which are computed from the former (depend on other features), along with its entire definitions. This allows deploying the models with the proper features computation required safely and automatically. It also allows detecting common feature definitions and any semantic changes - any change in the feature definition/formula -, across distinct models.

In an embodiment, each model served in the inference graph may comprise using one or more CPUs and/or GPUs, in particular an allocation of a specific GPU for a specific model, as well as parallelization steps for said model and can run on separate machines with the appropriate hardware for the task. In this case, the Controller is configured to allocate resources for the Inference API service, and for each of the model servers that host and serve models, each with appropriate hardware specific components to perform its task (an inference node) within the inference graph, which could require dedicated computer machines. The set of computations and models to be used are chosen by code executing the inference API and may depend on the inference request that a client sends to the inference API.

The following pertains to the Inference API. In an embodiment, the Inference API receives inference requests from different clients, tenants or any other service with permission to call the API, and is configured by code executing in one or more CPUs or GPUs to provide inference responses, which could be scores and/or decisions, namely decision strings.

In an embodiment that provides such responses, this component hosts an inference graph which determines the inference requests' processing - data flow, allocation of physical resources and details of which models to serve in which scenarios, etc. The inference request passes through the inference graph nodes according to the routing rules - a set of conditions that define the routing of the request in a graph of models/ensembles/functions/etc. - and as the message leaves the graph, an inference response is produced. Another embodiment may operate without an inference graph, but this graph is a compact and general way to represent and explain the system behavior.

In an embodiment, there are two distinct subsystems with two different roles and operation timelines and goals - inference service and controller.

The inference service (preferably distributed) which can be scaled horizontally and where each replica responds to inference requests in real-time with very low latency requirements and simply executes the operations defined in its inference graph (normally a static inference graph) in the exact sequence that such graph defines. This might require doing external calls to other systems, like computing a set of features in a transformation node, or making a remote call to a model server hosting a model in an inference node.

The controller is a system that can orchestrate any requested change to the inference service, like replacing or adding a model, or changing some routing in the inference graph, or coordinating backfill of metrics, or coordinating with the online feature store new sets of features to compute, which might require backfills, or even triggering model evaluation or calibration fitting jobs, or any other work related to modifying the inference service. Any such operation can take a non-negligible amount of time and can even be run in background; there is no low-latency requirement for it.

Finally, when the subsystems are ready and background jobs finish, the system (typically carried out by the controller) modifies the inference graph by replacing it with a new definition atomically. It is important to stress that any change to any of the inference service replicas hosting a copy of the inference graph works as if it was atomic - i.e., its graph is never in an inconsistent state for an individual replica, but instead either in the old or new version - this property along with routing that can support computations with the old and new graph mean that blue/green deployments as are often used in the area, although possible are not a requirement. This lets the system run smoothly with a smaller computation footprint on updates to the inference graph while still operating exactly - i.e., serving each inference request correctly and as defined as the system is gradually updated.

The following pertains to the inference requests. In an embodiment, any inference client endpoint can be seen as a black-box, with no requirements besides its inference requests containing the features and optionally providing certain useful metadata to pick the exact models to serve server-side per individual inference request.

In an embodiment, this metadata comprises a client identifier, which is used by the Inference API to do authentication and authorization steps, so as to avoid providing information to unauthorized clients. The client identifier, which is extracted and validated during authentication, can also be used to choose inference models in multi-tenant contexts in the inference graph through the use of routing rules.

In an embodiment, the metadata also comprises a stream identifier. This is an optional and arbitrary data in the requests string that enables the client endpoint to signal to the inference service the preference of the model to serve. A tenant that uses more than one model for different scenarios needs to pass this information, so the inference service can pick the appropriate model to serve for each use case. For instance, there might be different sub-streams at play for a given client: one stream identifier string can be "account_openning", and another can be "transaction_validation". Each of these stream identifier strings can relay to different models server-side.

In an embodiment, the metadata also comprises a schema identifier. When the client wants to use a different version of the model containing features that the previous model does not use, the enumerated mechanisms may be insufficient. The schema identifier enables the inference graph to distinguish between different schema versions for a set of models that solve the same problem. While this field is optional, since there can be a routing rule deciding which schema the inference request is compatible with, the schema version helps with efficiency. Therefore, this field is used to coordinate or synchronize schema changes between inference client and server during model upgrades letting the client deploy changes at any time later than that of the update of the server inference graph. The schema identifier is sent in the client request to indicate a certain schema for inference, just as in some network communication protocols the client can request a given protocol version to be used. The inference service is configured to still perform validations that the inference request conforms to that schema version or not. If it does not, the service will return an error instead of a model score.

In an embodiment, these metadata identifiers will be leveraged by routing rules at the inference API to enable model selection choices on the server-side, increasing the decoupling of the client from the choice of the exact model being served. This is further detailed below.

The following pertains to a minimal required feature set for the present disclosure. In an embodiment, to make model updating processes easier to synchronize between the inference client and model serving, the client does not need to send inference requests with the exact features required for a particular model, and sends a superset of those instead. The inference service takes the superset of features and picks only the required features for the exact model inference call. This design means the client can send a superset of features so as to ease the replacement of a model by another with little to no synchronization required between client and server, regarding the exact model update time service-side. As long as the features sent in the inference requests are enough for either the old or new models, the service can switch between both seamlessly at any time. This is done safely, as each served model has a definition of the required features, which are always validated before computing the score.

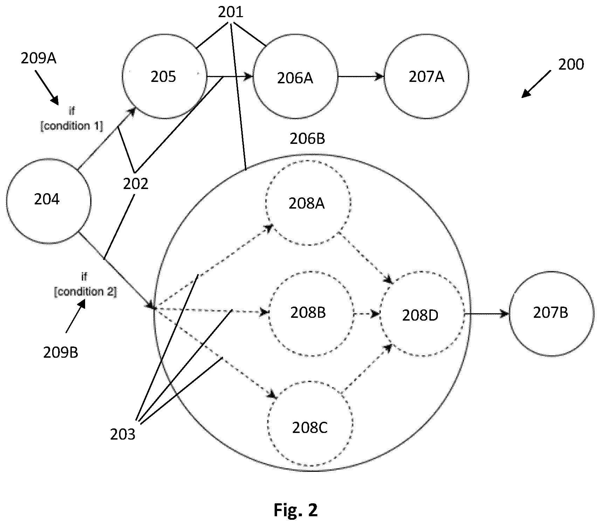

**Figure 2** represents an exemplary embodiment of an inference graph, where: **200** represents an inference graph, in particular a Directed Acyclic Graph (DAG); **201** represents a node; **202** represents an edge; **203** an inner edge inside a node, i.e., an inner logic edge; **204** represents a root node; **205** represents a transformer node, which can for instance compute new features from its inputs using a Feature Store; **206A** represents a model node, namely a Neural Network model node or a tree model node; **206B** represents an ensemble node; **207A** represents a calibration model node; **207B** represents another calibration model node; **208A, 208B** and **208C** represent three different ensemble model nodes pertaining to the ensemble node **206B; 208D** represents an aggregation node pertaining to the ensemble node **206B; 209A** represents a condition of a respective edge for performing a posterior set of nodes after said respective edge; and **209B** represents another condition of another respective edge for performing a posterior set of nodes after said other respective edge.

The following pertains to the inference graph. In an embodiment, the inference graph is a Directed Acyclic Graph (DAG) **200** that defines how inference requests are processed. The inference graph **200** is composed of nodes **201** and edges **202** that are determined by routing rules set by the users responsible for managing the ML strategy. Nodes **201** comprise models, ensembles, functions or others. It is a composition of several parts, such as edges **202** (defined by routing rules) and nodes **201** of several kinds: Simple inference nodes - models **206A,** Ensemble nodes **206B,** Calibration node **207A** and **207B,** Aggregation functions **208D,** and Transformer node **205** (e.g., compute features with a Feature Store).

In an embodiment, this DAG **200** starts with a root node **204** that receives all inference requests and is configured to then route them through the DAG **200** based on the conditions set in the routing rules **209A** and **209B** (which define the edge-level conditions that determine where the messages pass through the graph, until they hit the leaf nodes) and the inference graph is traversed and a score and/or decision is computed in a processor, configured by code and which is associated with this process, and returned to the client.

In an embodiment, the DAG nodes **201** are usually simple inference nodes - which designate simple models **206A** (a tree model, or a Neural Network), or more specialized ones, which could be an ensemble of models or stack of models **206B,** or application of a transformation such as an individual calibration function/model **207A** or **207B,** such as the example of **Figure 2****.**

In an embodiment, special inference node types like ensembles **206B** require additional configurations so as to create their inference subgraph. Namely, if a weighted average aggregation is used for the ensemble output instead of a simple average, the weights should be specified as part of the data exchange in the requests, responses, or both. Additionally, model-based aggregation can also require some advanced configuration.

Each request routed through the inference graph **200** is registered in the Event Collection system, so as to allow further model and calibration retraining with production data, without issues like that of data skew between development and production environments.

In an exemplary embodiment, the Inference Graph **200** is statically typed regarding schemas and message flows - each inference node resource **201** has an input and output schema, e.g., the model's schema, and this can be statically checked to ensure the correctness of said Inference Graph **200,** i.e., if it is valid or not, thus preventing several types of runtime errors. For example, unlike other systems, the present disclosure can check that changes to the Inference Graph **200,** which will not break schema compatibility.

The following pertains to Routing Rules. In an embodiment, routing rules define the data flow in the graph **200,** which is done by encoding in the Inference Graph's edges **201** with the respective conditions for data to flow through each edge. Any field from the event or its metadata, usually, stream identifiers, are used to decide the event path in the subgraph containing models **206A,** ensembles **206B,** calibration **207A** or **207B,** and aggregation functions **208D.**

In an embodiment, the default use case of routing rules is to use, whenever possible, the latest model available for that client and configured stream identifier, while respecting the requested schema.

In an embodiment, the flexibility of routing rules to select models **206A** or **206B** with a fine level of control allow data scientists managing said computer system to roll out model updates at scale, or granulary, per client, or with other criteria, without requiring intervention or control client-side. However, it is also possible to make exceptions for stream identifiers and route them to a specific model and/or ensemble and/or calibration (and/or other node) version to gain more control of the updates or inference flows.

Moreover, in another embodiment, different clients and clients' streams or workflows will need different calibration functions **207A** or **207B.** The score calibration step is necessary as the scores influence downstream rules and decisions in the workflow. Similarly to the models **206A** or **206B,** through use of routing rules, specific calibration functions **207A** or **207B** are either selectable or the routing will default to one according to the configuration.

Another embodiment for routing rules would be client-side-driven A/B testing splits using different event variables.

The following pertains to Projects. In an embodiment, models and other artifacts are served under different projects to separate ML teams working in different initiatives and ease the management of access control, provisioned resources, etc. The projects are an optional abstraction for organization purposes.

The following pertains to the Feature Store. In an embodiment, the present disclosure is augmented through the optional use of a Feature Store. A Feature Store is a system, preferably distributed and/or external, that can receive an event with a given set of fields and which is configured by code executing in one more processors to augment the received fields/features through feature computation. To satisfy low latency requirements, an online Feature Store is preferable.

In an embodiment comprising a Feature Store, the inference requests sent by the client gain a wider compatibility across models, as the Feature Store can take a base set of features which is usually more static through the lifetime of an ML project, and compute the required missing features for each specific model version, which usually varies more often as the data scientists that create new models are often using feature engineering and feature selection to produce better models. Alternatively, these features are externally injected, for example by the client in the requests.

The following pertains to Calibration curves and/or models. In an embodiment, each inference node (a model, or composition of models such as an ensemble or model stack) **201** in the DAG **200** is often followed by a calibration subgraph.

In an embodiment, while the same models are shareable by different clients (e.g., ensembles and foundational models), score distributions are to be preserved and remain stable for each and every inference client across model updates. Since calibration is sensitive to the particular data distribution, by applying specific calibration curves **207A** or **207B** to each individual client data stream at the output calibration stage of each individual model, greater control over score divergences is attained. Because of this, each calibration step occurring after an inference node is often not followed by a single calibration node that transforms any event going through it regardless of its stream, but instead it is followed by a calibration subgraph that causes the model output to be routed to finely-tuned calibration curve nodes **207A** or **207B** partitioned by client and stream, if not other fields. This means that even if models are shared across clients, the calibration curves **207A** or **207B** automatically scale with the distinct combinations of models, clients and stream identifiers. By contrast, managing all those calibration curves **207A** or **207B** manually would be daunting for any expert in the area, and so it is important for the computer system to tune calibrations automatically based on set (predefined) criteria by the users, which is in accordance with the present disclosure.

In an embodiment with a usable calibration curve that is applied to an inference node, the present disclosure can use an initial calibration curve passed by the users, or even several client-dependent and model-dependent calibration curves to use in the inference graph **200.** However, to keep the system tuned, the system in one or more implementations, criteria is used to instruct the system to automatically improve and maintain the calibration curves up-to-date by refreshing them whenever some condition is met, or periodically from time to time or every time a predetermined number of events occurs.

In an embodiment, calibrations are applied to more complex inference nodes **201** in the graph other than individual models. Consider for example the case of ensembles of models. An ensemble subgraph, such as the ensemble model node **206B of** **Figure 2****,** within the inference graph **200** performs several steps under control of a suitably configured processor: the inference request is first routed to each model **208A, 208B** and **208C** in the ensemble, features are selected for each individual model, its score is computed, optionally, that individual model output is calibrated, and finally, the calibrated scores of all the models in the ensemble are aggregated **208D.** At the very end, a final calibration step **207B** is applied to the ensemble output.

An embodiment has models that can also output other types of results, like embeddings, instead of scores. When that is the case, such outputs are not possible to calibrate: the inference graph **200** can have code that configures a processor to reject attempts to build such invalid configurations. This is also one of the exemplary embodiments for providing flexibility regarding which models of an ensemble are calibrated, i.e., if the individual ensemble models produce embeddings and only the final aggregator model produces a score from those, then only the ensemble aggregator output is calibrated.

The following pertains to the Controller and to the Training and Evaluation Environment. In an embodiment, the Controller is configured to modify the Inference Graph **200** by receiving instructions to modify said Inference Graph **200** in certain ways, e.g., by adding and/or removing and/or replacing an existing node **201,** or changing the graph routing, e.g., by removing or re-orientating edges **202,** or by changing conditions for triggering a specific edge **209A** and **209B.** Additionally, the Controller is configurable by code to make decisions automatically, without user intervention, to modify the graph **200,** based on criteria set by the users.

In an embodiment, throughout this process, Model Serving publishes inference request metrics (e.g., how many events have been scored) and other services push inference labels. The Controller reads statistics generated from these metrics, and uses them to periodically trigger a model refresh (train a model with newer data) if the model performance has lowered considerably according to the criteria set by the user.

Additionally, in certain implementations calibration functions are deployed in Model Serving similarly to models using the Controller. This enables the system to continuously tune calibrations automatically as more data appears. With this information, the Controller is configured to then trigger a new calibration training after a set amount of time has passed or the number of events per stream identifier routed through a given node **201** have been surpassed. The Controller performs this by triggering a job on the Training Environment, which will use the required data stored in Event Collection to refresh the calibration function using the new data. After that calibration fit step is completed, the calibration curve/model is stored on the Model Registry, and the Controller will tell the Inference API to modify its inference graph so as to replace and/or deploy the new calibration function under a given calibration node **207A or 207B** and adjust the routing rules accordingly, to monitor the behavior of the new calibration, and finally replace it if deemed good enough. These steps are performed with negligible latency impact on the system.

The following pertains to the Event Collection. In an embodiment, all events entering the model serving system, as well as the inference responses of each node **201** and inference labels are stored in Event Collection, allowing for posterior data usage, such as for model refreshing by the data science team, and automatic model calibration functions re-tuning by the controller.

The following pertains to the Models. An exemplary embodiment, such as the one described in **Figure 2****,** may encompass a single machine learning model **206A,** an ensemble of multiple models **206B,** or any more complex inference graph **200.** The present disclosure elaborates on the processes involved in model versioning and model calibration within our system.

An embodiment safeguards against use of the wrong inputs (through input schema validation) and prevents usage of models with features with semantic differences/changes. For instance, a feature's semantics could have changed (e.g. it now counts the transactions in the last 6 hours instead of 4 hours), but its name was kept the same across two model iterations. The system ensures that when a given model iteration is served it receives the exact features it was trained with during inference. A semantic change in a feature is any change in the computation of the feature from its input(s) until a final output is produced. If the feature didn't change name but its computation was re-written, e.g., say the units changed from seconds to milliseconds, or some ratio now has a different denominator, or any other part of the analytical expression that represents the computation of the feature has changed, this corresponds to a semantic change in a given feature - for its output is no longer identical to the old one.

The following pertains to the Model Versioning. In an embodiment, to ensure a natural evolution of the models in a model serving system and to ensure a simpler management of model revisions, and besides the fact that each individual model revision has a well defined schema, it is useful to version the different revisions of a model artifact through semantic versioning, which contains both major versions and minor versions.

An embodiment where a revision is labelled as a major version, models with the same major version revision are guaranteed to be schema compatible. Note that frequently, a model update that uses additional or changed features (which would be a "semantic change" in a feature) would require a new major model version, because it is not directly fully compatible with prior versions.

An embodiment where a revision is labelled as a minor version, said revision indicates that there is a new model compatible with the previous' input, which is the most common revision for model refreshes. Herein, a model refresh is a new version of a model that is backward compatible with a previous version, as its features maintain the same schema and the same semantics. Frequently, a model refresh is a new version of the model simply trained with more or newer data.

In an embodiment, whenever a new model revision is registered using the Model Registry API, the major version number should always be specified by the caller. On the other hand, the minor version is optional, and if left empty, the system will automatically compute it based on the existing versions, and return it to the caller. In this process, the disclosed system uses the model schema definition to compute a schema identifier for this model revision. Using the model registry schema catalog, the model registry validates whether the new model schema is compatible with prior model revisions with this same major version. If so, the artifact is uploaded, and the schema identifier is added to the model metadata of this new revision, and its minor version is auto-incremented as usual in the technical field, effectively registering the latest version of that model's major version. If the schema is incompatible, the request is denied. With this process, the users are enabled to register new model revisions for any of the model's major versions.

An embodiment where the disclosed computer system is operating at runtime, clients specify in the inference requests the schema identifier, which relates to the major version, not the model minor version. With this, schema-compatibility is retained between client and server, and the flexibility to change the exact model being served at any time.

An embodiment also makes simpler the definition of routing rules that are configured to simply pick the "latest" minor version for a model's major version for a given client or set of clients, while also allowing the specification of a concrete minor version to serve, if need be.

The following pertains to Versioning in Ensembles in accordance with the present disclosure. In an embodiment, versioning becomes more complex with ensembles, due to the arbitrary number of models and combinations of updates. Similarly to previously disclosed embodiments, if one or more models of the ensemble are changed without requiring new and/or different features, or if the weights or aggregation function of the ensemble change, a new minor version is created. However, if one or more ensemble models requires new and/or different features, a new major version is created. Note that different features encapsulate both schema changes. For example, the name of a feature changes and changes in semantics, i.e., the meaning of a feature, are different, (e.g., one schema may have a field "count_transactions" that refers to transactions occurring in the last seven days, i.e., the previous week, and in another schema instance this same field may be counting transactions for the last hour). In both semantic and schema changes, the change is categorized as a major version.

In an embodiment, this same principle applies to model stacks, and other composite inference subgraphs.

The following pertains to Model Calibration. An embodiment aims to maintain the consistency of score distributions following model refreshes or updates, ensuring that downstream processes relying on these scores remain unaffected. These processes include rules that apply thresholds to model scores for decision-making. To achieve this stability, model calibration is performed.

Model calibration techniques adjust the model's output to ensure that the probability estimates or scores produced are statistically consistent with the observed frequencies of the target variable. This ensures that any changes in the model do not disrupt the thresholds and rules set for post-processing processes.

The following pertains to the calibration method. In an embodiment, the architecture of the disclosed computer system is arranged to flexibly employ the most suitable calibration techniques for each use case. The methods used herein include, but are not limited to, empirical binning, isotonic calibration, Platt scaling, and Beta calibration [5]. This flexibility ensures that the calibration approach is tailored to the specific requirements and characteristics of each scenario, enhancing the accuracy and reliability of the model's output.

The following pertains to an Automated Model Transition Flow. In an embodiment, replacing an existing model with finely-tuned calibration curves with a new model without proper calibrations would immediately result in a large score distribution divergence observed by clients. Also, as previously stated, managing numerous calibration curves through manual means quickly becomes impractical. Thus, although there is an appropriate calibration flow that conceivably could be performed manually by making requests to the Controller, the Controller according to the present disclosure is configurable by code executing in one or more processors to automatically perform the new model update flow so as to avoid score divergences during model updates.

An embodiment comprises a flow for updating a model, when the schema of the new and old model match. To perform this smooth deployment, the user informs the Controller of the intention to replace an existing model with a new one by configuring the success thresholds of each stage, which the Controller is configured to perform and check. After that process is started, the Controller is configured by code executing therein to follow the sequence of optional steps, with a first step of deploying a new model in shadow mode. Herein, the new model is added to the inference graph with a routing in shadow. In the shadow routing, the inference requests that were sent to the old model are now also routed to the new shadow model (i.e. the new model in shadow mode), but the old flow is kept intact. Since the shadow model is now also processing requests, the shadow model scores are now also stored in Event Collection, but will not be returned to the client. The clients keep observing the old behavior, i.e., they still simply receive scores from the live model.

In an embodiment, the second step of the sequence is the collection of data for calibration. After sufficient data is collected from the new shadow model, the Controller triggers a calibration curve model fit job. Note that the data collected is deemed sufficient according to a user predefinition or it is determined automatically by the system, e.g., after 100,000 events.

In another embodiment, for cases where the input throughput of this second step is low and accumulating this data therefore would take a long a time, the user can instruct or otherwise configure the computer system to instead proceed and compute the shadow model scores in an offline batch job upon a prior historical data sample of the same size using the before-mentioned Training/Evaluation environment.

Notice that, for this second step, calibrations can be computed on partitions as granular as intended. This means that, usually, there is an exhaustive partitioning of events to calibration models/curves set at the output of the upstream inference node. For example, events are partitionable by client identifier and by stream identifier. This partitioning choice, or none, is arbitrary and configured by the user.

In an embodiment, the third step of the model updating flow comprises fitting the new calibration curves, which is done using the collected data, and in case there is partitioning, one calibration curve/model is trained per partition. After producing the new calibration curves, these are registered in the Model Registry. Then, a fourth step comprises integrating the new calibration curves, i.e., appending the new calibration curve(s) subgraph after the shadow model output in the inference graph.

In an embodiment, the fifth step of the model updating flow comprises a shadow-validation period, which validates the divergence score between old and new calibrated models. This can be executed through a job run in the Evaluation environment, using the Event Collection data. If divergence is high, the process is repeated with more data or aborted depending on the success criteria. The divergence threshold for success and number of evaluation points are parameters set by the users when the flow was initiated. Then, in a sixth and final step, the inference graph **200** is modified for deployment. If validation was successful, the old model is removed and requests are routed to the new model.

In an embodiment, in the case of model updates where the schema changes, but the new model revision uses a subset of the features of the old model, or optional feature imputation functions can impute the missing ones, the flow is identical to the aforementioned one. However, in the case of model updates where the new model schema is no longer a subset of the old one, this flow requires some changes, with the Controller being configured by code executing therein to perform the changed flow described next. Firstly, the requests should contain the superset of base features so that, when selected by the system, they are enough to perform inference with both the old and new model, or from them they can be augmented through the use of a Feature Store so that such augmented features are enough to perform inference with both the old and new models. Secondly, the new model is added to the graph in shadow. In this new branch of the inference graph **200,** the new model features are selectable from the incoming requests or are augmented through a Feature Store with a Transformation node (e.g. **205).** Thirdly, the new calibration curves are fitted using the new collected scores or historical data is usable in an offline batch job to generate the scores, in case the client was already sending the superset of base features that also contains the features required for the new mode, or the missing features are generated from the base ones through a Feature Store. Fourthly, as soon as the new shadow model calibration is ready, the inference requests are routed to it and the older model can be deprecated. Optionally, after the routing is directed towards the new model, a different model identifier is returned in the inference response, signalling to the client that the model has been replaced. From this point on, the client can stop sending the old features.

In an embodiment, the automated model flow requires the client to send the union of features of both models at first (or alternatively using the online feature store to compute such features from the features available in the inference request).

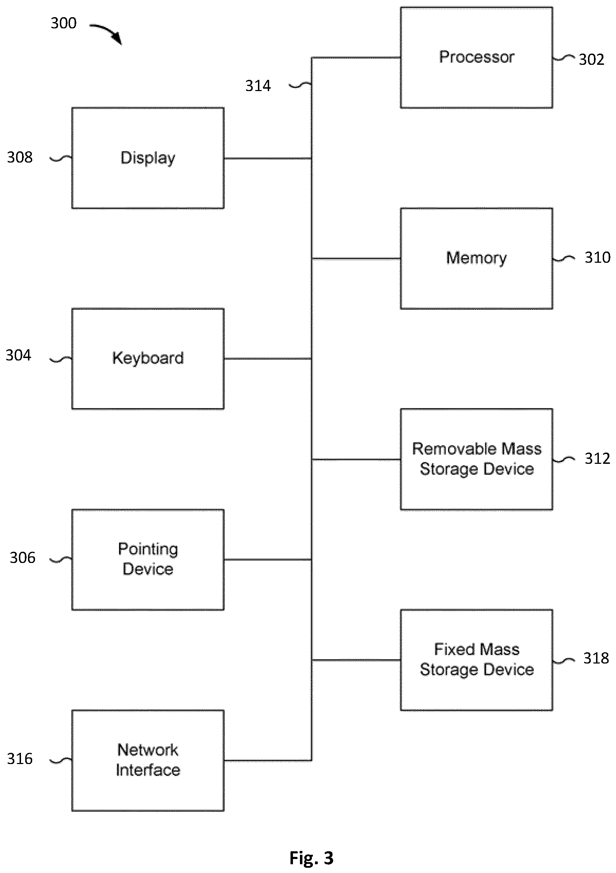

**Figure 3** is a functional diagram illustrating a programmed computer system for supporting some exemplary embodiments of the present disclosure, where: **300** represents a computer system; **302** represents one or more processors, e.g., a microprocessor, a graphics processor, a network processor, a central processing unit (CPU), etc.; **304** represents an interface device, such as a keyboard; **306** represents a pointing device, namely a computer mouse, a stylus pen or a joystick; **308** represents a display such as a monitor or a touch sensitive screen component; **310** represents one or more memory elements, namely a non-volatile memory, a volatile memory, a cache memory, a Random Access Memory (RAM) and/or one Read Only Memory (ROM); **312** represents a removable mass storage device; **314** represents an interconnection element serving to link the various computer components, namely a bus; **316** represents a network interface; and **318** represents a fixed mass storage device, namely a flash memory or a magnetic, optical, or solid state drive.

It is to be appreciated that certain embodiments of the disclosure as described herein may be incorporated as code (e.g., a software algorithm or program) residing in firmware and/or on computer useable medium having control logic for enabling execution on a computer system having a computer processor, such as any of the servers described herein. Such a computer system typically includes memory storage configured to provide output from execution of the code which configures a processor in accordance with the execution. The present disclosure is also particularly apt for execution on a GPU - graphics processing unit (a specialized processor explicitly designed for executing graphical algorithms), NPU - neural processing unit (a specialized processor explicitly designed for executing machine learning algorithms), or any other inherently parallel processing unit. For example, models were run on a Linux PC with Intel Xeon CPU cores and a NVIDIA GeForce RTX. The code can be arranged as firmware or software, and can be organized as a set of modules, including the various modules and algorithms described herein, such as discrete code modules, function calls, procedure calls or objects in an object-oriented programming environment. If implemented using modules, the code can comprise a single module or a plurality of modules that operate in cooperation with one another to configure the machine in which it is executed to perform the associated functions, as described herein.

A client or client endpoint, as used herein, refers to any computational machine capable of interacting with the system described herein, and includes a processor, memory, and code that implements the client functions in the foregoing client-server architecture.

A computer data processor, as used herein, refers to any system, device, or apparatus capable of processing data in accordance with the methods described in this disclosure. The computer data processor may include one or more processors, such as a central processing unit (CPU), a graphics processing unit (GPU), or any combination thereof. These processors may be implemented as a single chip, a multi-core processor, a distributed computing system, or any other suitable configuration. For example, this can be a central processing unit (CPU), such as an Intel^{®} Core^{™} i7 processor, and memory modules, including 16 GB of DDR4 RAM. The system may include a solid-state drive (SSD) as a non-volatile memory for storage, one or more optional GPUs (e.g., NVIDIA^{®} GeForce RTX^{™} 3060), and runs a standard operating system, such as Microsoft^{®} Windows^{®} or Linux^{®}. For example, this can be an embedded system utilizing a microcontroller, such as the ARM^{®} Cortex^{®}-M4 processor, with onboard memory (e.g., 1 MB of flash storage and 256 KB of SRAM). For example, this can also be a cloud-based virtual machine hosted on a server infrastructure, such as an Amazon Web Services (AWS) EC2 instance, featuring virtual CPUs (vCPUs) based on Intel^{®} Xeon^{®} or AMD EPYC^{™} processors. The instance can be configured for example with 32 GB of RAM, 1 TB of elastic block storage (EBS), and executes server-side software designed to perform the computational processes disclosed in this specification.

In exemplary embodiments, the models were executed on a computing system comprising a Linux-based operating environment, Intel^{®} Xeon^{®} multi-core central processing units (CPUs), and a NVIDIA^{®} GeForce^{®} RTX-series GPU. The use of such parallel processing or neuronal network processing units enables a significant reduction in computational latency and an improvement in throughput for the inference stages of the disclosed models. Significantly, the disclosed architecture is inherently suited for implementation by parallel processing or neuronal network processing units.

Consequently, the invention leverages the architectural advantages of parallel processing to achieve enhanced computational efficiency, scalability, and responsiveness, thereby addressing the technical problem of optimizing resource utilization in high-dimensional machine learning tasks.

The computer data processor may further include non-transitory computer readable storage device such as memory (e.g., random access memory (RAM), read-only memory (ROM), flash memory, or other suitable storage devices) for storing instructions and data. The processor executes instructions stored in memory to perform the functions described in this specification. The instructions may be implemented in any programming language, including but not limited to assembly language, C, C++, Python, or Java.

The computer data processor may communicate with input/output devices (e.g., a keyboard, mouse, touchscreen, or display), peripheral devices, or external systems via wired or wireless connections, such as USB, Bluetooth^{®}, Wi-Fi^{®}, or Ethernet. The data processor may also be integrated with or connected to a network, including a local area network (LAN), wide area network (WAN), or the internet, to receive and transmit data.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable.

The above-described embodiments are obviously combinable. The dependent claims set out particular embodiments of the invention.

The following dependent claims further set out particular embodiments of the disclosure.

### References

[1] Washizaki, H., Uchida, H., Khomh, F., & Gueheneuc, Y.-G. (2019). Studying Software Engineering Patterns for Designing Machine Learning Systems (Version 2). arXiv. https://doi.org/10.48550/ARXIV.1910.04736
[2] Giray, G. (2020). A Software Engineering Perspective on Engineering Machine Learning Systems: State of the Art and Challenges (Version 3). arXiv. https://doi.org/10.48550/ARXIV.2012.07919
[3] Wu, C.-J., Brooks, D., Chen, K., Chen, D., Choudhury, S., Dukhan, M., Hazelwood, K., Isaac, E., Jia, Y., Jia, B., Leyvand, T., Lu, H., Lu, Y., Qiao, L., Reagen, B., Spisak, J., Sun, F., Tulloch, A., Vajda, P., ... Zhang, P. (2019). Machine Learning at Facebook: Understanding Inference at the Edge. In 2019 IEEE International Symposium on High Performance Computer Architecture (HPCA). 2019 IEEE International Symposium on High Performance Computer Architecture (HPCA). IEEE. https://doi.org/10.1109/hpca.2019.00048
[4] Wan, Z., Xia, X., Lo, D., & Murphy, G. C. (2020). How does Machine Learning Change Software Development Practices? In IEEE Transactions on Software Engineering (pp. 1-1). Institute of Electrical and Electronics Engineers (IEEE). https://doi.org/10.1109/tse.2019.2937083.
[5] Filho, T.S., Song, H., Perello-Nieto, M., Santos-Rodriguez, R., Kull, M., Flach, P. (2021) Classifier Calibration: A survey on how to assess and improve predicted class probabilities (Version 2). arXiv. https://doi.org/10.48550/arXiv.2112.10327.

## Claims

1. A computer-implemented method for deployment of a first machine-learning model, and replacement, without service interruption, of a second machine-learning model in active on-line use, by the first machine-learning model, the method comprising:
receiving, at a controller configured by code executing therein, a replacement request determining a replacement of the second machine-learning model by the first machine-learning model, and
in response to said replacement request, the controller triggering the deployment of the first machine-learning model and triggering the calculation of features to be used by the first machine-learning model;
the method further comprising, carrying out by a computer system comprising said controller and configured by code executing therein, in response to said replacement request, to perform the steps of:
collecting output data from the first machine-learning model over a predetermined number of inference requests or events,
fitting one or more calibration functions to the collected output data to generate one or more calibrated outputs of the first machine-learning model,
inserting downstream from the first machine-learning model the one or more calibration functions, and
routing inference requests to the first machine-learning model instead of the second machine-learning model;
wherein the triggered deployment of the first machine-learning model comprises preloading the first machine-learning model into at least one of a CPU memory and a GPU memory;
wherein the method further comprises making available the calculated features to the preloaded first machine-learning model, and making available the preloaded first machine-learning model into the at least one of a CPU memory and a GPU memory by at least one of a CPU and a GPU, respectively, before routing inference requests to the first machine-learning model instead of the second machine-learning model.

2. The computer-implemented method, according claim 1, for deployment of the first machine-learning model wherein the first machine-learning model is part of an inference graph, and replacement, without service interruption, of the second machine-learning model in active on-line use, by the first machine-learning model, the method comprising:
receiving, at the controller, the replacement request determining a replacement of the second machine-learning model by the first machine-learning model, and
in response to said replacement request, the controller triggering the deployment of the first machine-learning model and triggering the calculation of features to be used by the first machine-learning model;
the method further comprising, carrying out by a computer system comprising said controller and configured by code executing therein, in response to said replacement request, to perform the steps of:
collecting output data from the first machine-learning model over the predetermined number of inference requests or events,
fitting the one or more calibration functions to the collected output data to generate the one or more calibrated outputs of the first machine-learning model,
inserting the one or more calibration functions into the inference graph downstream from the first machine-learning model, and
modifying the inference graph to route inference requests to the first machine-learning model instead of the second machine-learning model;
wherein the inference graph is a directed acyclic graph comprising nodes wherein one or more of said nodes are a machine-learning model node;
wherein the triggered deployment of the first machine-learning model comprises preloading the first machine-learning model into a machine-learning model node of the inference graph, where the machine-learning model node comprises the at least one of a CPU and a GPU, and the at least one of a CPU memory and a GPU memory, respectively;
wherein the method further comprises:
making available the calculated features to the preloaded first machine-learning model, and making available the preloaded first machine-learning model by the machine-learning model node, before modifying the inference graph to route inference requests to the first machine-learning model instead of the second machine-learning model.

3. The computer-implemented method according to any of the previous claims, further comprising, after preloading the first machine-learning model and before the inference requests are routed to the first machine-learning model routing in a shadow mode the inference requests to both the first and second machine-learning models and using outputs of the first machine-learning model for collecting output data for fitting the one or more calibration functions to the collected output data.

4. The computer-implemented method according to any of the previous claims wherein the replacement request contains, or contains an identifier indicating, a feature schema, wherein said feature schema contains or indicates a set of machine-learning model features to be used by the first machine-learning model, and the method further comprises:
determining, by the controller configured by further code executing therein, which features of said set of machine-learning model features are required for the first machine-learning model;
triggering, by the controller, the calculation of the features to be used by the first machine-learning model that require calculation;
activating, by the controller, the feeding of the calculated features to be used by the first machine-learning model and the feeding of the features to be used by the first machine-learning model that do not require calculation;
making available the calculated and fed features to the first machine-learning model;
in particular wherein the method further comprises the determining, by the controller, which features of said set of machine-learning model features require calculation from a machine-learning model registry; and/or wherein the method further comprises the determining, by the controller,
which features of said set of machine-learning model features which do not require calculation from the received replacement request.

5. The computer-implemented method according to any of the previous claims, comprising backfilling a feature datastore configured by code executing therein and triggered by said controller, with one or more calculated features for the first machine-learning model using historical data that is prior to the inference requests being routed to the first machine-learning model, comprising:
backfilling offline, by the feature datastore, the one or more calculated features;
sending, by the feature datastore, a signal back to the controller, that the one or more calculated features are ready to be used;
triggering, by the controller configured by further code executing therein, on receiving said signal,
the routing inference requests to the first machine-learning model instead of the second machine-learning model.

6. The computer-implemented method according to any of the previous claims wherein, based on the inference request, the controller applies routing rules based on a machine-learning model version identifier or a schema identifier to select a machine-learning model as the first machine-learning model for processing the inference request, wherein a schema identified by the schema identifier comprises an indication of machine-learning model features to be used by the machine-learning model to be selected, in particular based on an identifier comprised in said inference request wherein the controller applies routing rules based on a machine-learning model version identifier, a client identifier, a stream identifier or a schema identifier to select the machine-learning model for processing the inference request.

7. The computer-implemented method according to any of the previous claims, wherein fitting the one or more calibration functions comprises fitting the one or more calibration functions to match an output distribution of the first machine-learning model to an output distribution of the second machine-learning model within a predetermined divergence threshold.

8. The computer-implemented method, according to the claim 2, or according to claim 2 and any of the claims 3-7, wherein the inference graph is a directed acyclic graph comprising nodes wherein each node is selected from the group consisting of: model nodes comprising a machine-learning model, ensemble nodes comprising two or more machine-learning models, calibration nodes comprising the one or more fitted calibration functions, aggregation nodes combining outputs of a plurality of nodes, transformer nodes for computing transformations of inputs, and combinations thereof, in particular wherein two or more of the machine-learning models of said inference graph are arranged to be run in parallel and distributed among a plurality of hardware-based computer processors, in particular wherein machine-learning models of two or more nodes of said inference graph are arranged to be run in parallel and distributed among a plurality of hardware-based processors.

9. The computer-implemented method according to any of the previous claims wherein fitting the one or more calibration functions comprises collecting output data from the first machine-learning model over the predetermined number of inference requests or events using historical data, and fitting the one or more calibration functions to scores computed using the collected output data obtained from historical data.

10. The computer-implemented method, according to claim 2, or according to claim 2 and any of the claims 3-9, wherein each of the nodes of the inference graph are carried out by one CPU or by one GPU, which are arranged to be run in parallel and distributed among a plurality of hardware-based computer processors, in particular wherein the first machine-learning model is carried out by one CPU or by one GPU and the second machine-learning model is carried out by another CPU or by another GPU.

11. The computer-implemented method, according to claim 2, or according to claim 2 and any of the claims 3-10, wherein each of a plurality of inference service replicas is hardware-based and hosts an instance of the inference graph, wherein the method further comprises:
modifying, by said controller, for a first subset of said plurality of inference service replicas, the inference graph to route inference requests to the first machine-learning model instead of the second machine-learning model, and
maintaining, for a second subset of said plurality of inference service replicas, the inference graph routing inference requests to the second machine-learning model.

12. The computer-implemented method according to any of the previous claims wherein preloading the first machine-learning model into at least one of a CPU memory and a GPU memory, comprises loading the first machine-learning model from a non-volatile computer memory and wherein said CPU memory and GPU memory are volatile computer memories, in particular said non-volatile computer memory being an individual non-volatile computer memory of the corresponding CPU or GPU.

13. The computer-implemented method according to any of the previous claims, comprising a validation step of validating latency of the first machine-learning model against a latency threshold, and if, and only if, the latency is within the latency threshold routing the inference requests to the first machine-learning model instead of the second machine-learning model; and/or
comprising a validation step of validating precision of the first machine-learning model against a precision threshold, and if, and only if, the precision is within the precision threshold routing the inference requests to the first machine-learning model instead of the second machine-learning model; and/or
comprising a validation step of validating divergence between the calibrated outputs of the first machine-learning model and the outputs of the second machine-learning model against a divergence threshold, and if, and only if, the divergence is within the divergence threshold routing the inference requests to the first machine-learning model instead of the second machine-learning model.

14. A computer system for deployment of a first machine-learning model and replacement, without service interruption, of a second machine-learning model in active on-line use, by the first machine-learning model, configured for carrying out the method of any of the previous claims.

15. The computer system according to claim 14, wherein the computer system is a multi-tenant computer system and the controller is configured by further code executing therein, based on the inference request, for applying routing rules based on a tenant identifier to select a machine-learning model for processing the inference request, in particular said tenant identifier being comprised in the inference request.
